## Europäisches Patentamt
## European Patent Office
## Office européen des brevets

(11) Veröffentlichungsnummer: **0 200 137**
**B1**

(12) ## EUROPÄISCHE PATENTSCHRIFT

(45) Veröffentlichungstag der Patentschrift:
14.12.88

(51) Int. Cl.⁴: **H 01 H 47/04**, H 02 H 3/06

(21) Anmeldenummer: 86105492.2

(22) Anmeldetag: 21.04.86

(54) Ansteuerschaltung für ein monostabiles Relais.

(30) Priorität: 03.05.85 DE 3515951

(43) Veröffentlichungstag der Anmeldung:
10.12.86 Patentblatt 86/45

(45) Bekanntmachung des Hinweises auf die Patenterteilung:
14.12.88 Patentblatt 88/50

(84) Benannte Vertragsstaaten:
BE CH DE FR GB IT LI

(56) Entgegenhaltungen:
DE-A-2 809 905
US-A-3 300 689

(73) Patentinhaber: Siemens Aktiengesellschaft Berlin
und München, Wittelsbacherplatz 2, D-8000
München 2 (DE)

(72) Erfinder: Marx, Jürgen, Dipl.- Ing. (FH),
Schenkendorfstrasse 34b, D-8500 Nürnberg (DE)

## Beschreibung

Die Erfindung betrifft eine Ansteuerschaltung für ein monostabiles Relais, das über einen Ansteuerschalterschalter mit einer Ansteuerspannung verbunden ist und das bei geschlossenem Ansteuerschalter eingeschaltet wird, wenn die Ansteuerspannung größer als eine Erregungspannung ist und eingeschaltet bleibt, solange die Ansteuerspannung größer als eine Haltespannung ist, wobei die Ansteuerschaltung zum Einschalten das Relais mit der Erregerspannung und nach dem Einschalten mit der Haltespannung versorgt.

Bei monostabilen Relais entsteht im eingeschalteten Zustand eine Verlustleistung, die insbesondere bei kleinen, gekapselten Relais nicht zu vernachlässigen ist und bei gedrängtem Aufbau zu Einschränkungen in der Dimensionierung der gesamten Schaltung führt. Eine Reduzierung der Verlustleistung wurde bereits bei handelsüblichen Schaltungen dadurch erreicht, daß die am Relais anstehende Ansteuerspannung nach dessen Anziehen verringert wird. Relais brauchen nämlich zum Anziehen eine deutlich höhere Spannnung als zum Halten im angezogenen Zustand. Bei den herkömmlichen Schaltungen besteht allerdings das Problem, daß bei einem Ausfall der Versorgungsspannung das Relais abfällt und dann - da nur noch die niedrigere Haltespannung ansteht - nicht wieder anzieht. Eine bekannte Lösungsmöglichkeit besteht darin, daß eine Schaltungsanordnung vorgesehen ist, die nach einem Ausfall der Versorgungsspannung den Wiederanstieg der Versorgungsspannung erkennt und dann das Relais kurzzeitig wieder mit einer für das Anziehen ausreichenden Ansteuerspannung versorgt. Derartige Schaltungen sind jedoch recht aufwendig.

Aufgabe der Erfindung ist es daher, eine Ansteuerschaltung der eingangs genannten Art so auszuführen, daß bei geringem Aufwand eine Verringerung der Verlustleistung im Haltezustand und ein sicheres Wiederanziehen nach einem Ausfall der Versorgungsspannung erreicht wird.

Diese Aufgabe wird erfindungsgemäß dadurch gelöst, daß das Relais nach dem Einschalten periodisch mit Erregungsspannungsimpulsen beaufschlagt wird, wobei die Zeitdauer dieser Erregungsspannungsspannungsimpulse wesentlich kurzer ist als die dazwischenliegenden Pausen, in denen das Relais mit der Haltespannung beaufschlagt ist.

Mit dieser, mit geringem Aufwand zu realisierenden Schaltung wird erreicht, daß das Relais im angezogenen Zustand weit überwiegend nur mit der niedrigen Haltespannung versorgt wird, daß aber andererseits mit dem nächsten Erregungsspannungsimpuls nach einem Spannungsausfall das Relais wieder anzieht.

Die Erregungsspannungsimpulse können von einem astabilen Multivibrator oder von einem Mikrocomputer gesteuert werden. Wenn die das Relais beinhaltende Schaltungsanordnung ohnehin einen Mikrocomputer enthält, so kann dieser ohne zusätzlichen Aufwand die Steuerung der Erregungsspannungsimpulse mit übernehmen.

Bei einer Ansteuerschaltung, bei der die Ansteuerspannung von einem Netzteil erzeugt wird, bei dem eine wesentlich über der Ansteuerspannung liegende Spannung über eine Impedanz einer ersten Z-Diode zugeführt wird, an der die Erregungsspannung abgegriffen wird, kann eine zweite Z-Diode vorgesehen sein, die über einen Schalter der ersten Z-Diode parallel geschaltet ist und deren Zenerspannung gleich der Haltespannung des Relais ist und wobei dieser Schalter zwischen den Erregungsspannungsimpulsen geschlossen wird. Damit ist eine einfache Möglichkeit zur Spannungsumschaltung zwischen Erregungsspannung und Haltespannung gegeben. Wenn über das Netzteil außerdem ein Akkumulator zur Spannungspufferung bei Netzausfällen geladen wird, kann der Akkumulator zweckmäßigerweise über einen Schalter an das Netzteil angeschlossen sein und der Schalter während der Dauer der Erregungsspannungsimpulse geöffnet werden. Damit wird das Netzteil während der Erregungsspannnungsimpulse, die einen entsprechend höheren Stromverbrauch bewirken, nicht durch den Ladestrom für den Akkumulator belastet und kann somit entsprechend kleiner dimensioniert werden.

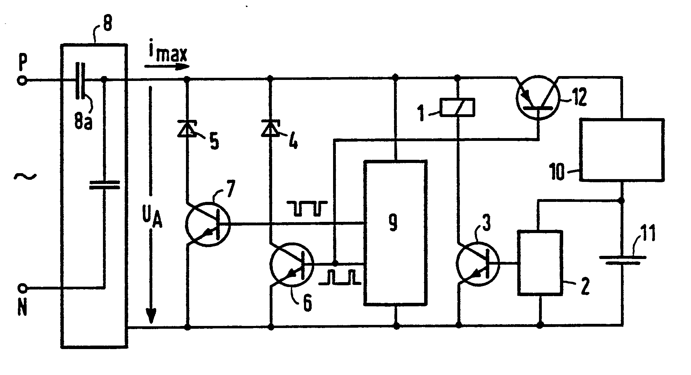

Ein Ausführungsbeispiel der Erfindung wird nachfolgend anhand der Figur dargestellt. Dabei ist im Ausführungsbeispiel ein einfaches Kondensatornetzteil 8 vorgesehen, bei dem eine Wechselspannungsquelle mit relativ hoher Spannung, beispielsweise die Netzspannung, über einen Kondensator 8a mit der Reihenschaltung einer ersten Z-Diode 4 und eines ersten Transistors 6 mit der Reihenschaltung einer zweiten Z-Diode 5 und eines zweiten Transistors 7, mit der Reihenschaltung eines Relais 1 und eines Ansteuerschalters 3 und schließlich mit der Reihenschaltung eines dritten Schalters 12 einer Ladeschaltung 10 und einer Batterie 11 verbunden. Außerdem wird mit der Ausgangsspannung des Kondensatornetzteils 8 eine Steuereinheit 9 versorgt, die den ersten Schalter 6 und den zweiten Schalter 7 ansteuert. Der Ansteuerschalter 3 wird von einer Steuerlogik 2 gesteuert, die direkt über den Akkumulator 11 versorgt wird.

Die Steuerschaltung 9, die beispielsweise ein astabiler Multivibrator oder Teil eines Mikrocomputers sein kann, schließt abwechselnd die beiden Schalter 6 und 7. Dabei entspricht die Zenerspannung der Z-Diode 4 der Erregungs spannungs des Relais 1 und die Zenerspannung der Z-Diode 5 der Haltespannung des Relais 1. Damit wird die Ausgangsspannung $U_A$ des Netzteils 8 abwechselnd auf die Haltespannung und die Erregungsspannung umgeschaltet. Dabei ist die Zeitdauer, in der die Erregungsspannung

ansteht, wesentlich kürzer als die Zeitdauer, in der die Haltespannung ansteht.

Wenn von der Steuerlogik 2 der Ansteuerschalter 3 eingeschaltet wird, so zieht das Relais 1 mit dem nächsten Erregungsspannungsimpuls an und bleibt dann auch angezogen, wenn die Spannung $U_A$ auf die Haltespannung abfällt. Bei einem Netzspannungseinbruch fällt das Relais 1 zwar ab, es wird aber bei Spannungswiederkehr mit dem nächst folgenden Erregungsspannungsimpuls wieder eingeschaltet.

Der Schalter 12 ist während der Zeiträume, in der die Haltespannung ansteht, geschlossen, so daß über die Ladeschaltung 10 die Batterie 11 aufgeladen werden kann. Während der Erregungsspannungsimpulse wird jedoch der Schalter 12 geöffnet, so daß in dieser Zeit keine Aufladung der Batterie 11 erfolgt. Damit wird während der Erregungsspannungsimpulse eine Belastung des Netzteils 8 durch den Ladestrom für die Batterie 11 vermieden, so daß in diesen Zeitabschnitten die Leistung des Kondensatornetzteils voll für die Erregung des Relais 1 zur Verfügung steht.

**Patentansprüche**

1. Ansteuerschaltung für ein monostabiles Relais (1), das über einen Ansteuerschalter (3) mit einer Ansteuerspannung ($U_A$) verbunden ist und das bei geschlossenem Ansteuerschalter (3) eingeschaltet wird, wenn die Ansteuerspannung ($U_A$) größer als eine Erregungsspannung ($U_E$) ist und eingeschaltet bleibt, solange die Ansteuerspannung ($U_A$) größer als eine Haltespannung ($U_H$) ist, wobei die Ansteuerschaltung (2, 3) zum Einschalten das Relais (1) mit der Erregungsspannung ($U_E$) und nach dem Einschalten mit der Haltespannung ($U_H$) versorgt,
    dadurch gekennzeichnet,
    daß das Relais (1) bei geschlossenem Ansteuerschalter (3) abwechselnd mit Erregungsspannungsimpulsen ($U_E$) und mit der Haltespannung ($U_H$) beaufschlagt wird, wobei die Zeitdauer, in der die Erregungsspannungsimpulse ($U_E$) anstehen, wesentlich kürzer ist als die dazwischenliegenden Pausen, in denen das Relais mit der Haltespannung ($U_H$) beaufschlagt ist.

2. Ansteuerschaltung nach Anspruch 1,
    dadurch gekennzeichnet,
    daß die Erregungsspannungsimpulse von einem astabilen Multivibrator (9) gesteuert werden.

3. Ansteuerschaltung nach Anspruch 1,
    dadurch gekennzeichnet,
    daß die Erregungsspannungsimpulse von einem Mikrocomputer gesteuert werden.

4. Ansteuerschaltung nach einem der Ansprüche 1 bis 3, wobei die Ansteuerspannung von einen Netzteil (8) erzeugt wird, bei dem eine wesentlich über die Ansteuerspannung liegende Spannung über ein Impedanz einer ersten Z-Diode (4) zugeführt wird, an der die Erregungsspannung abgegriffen wird,
    dadurch gekennzeichnet,
    daß eine zweite Z-Diode (5) vorgesehen ist, die über einen Schalter (7) der ersten Z-Diode (4) parallel geschaltet ist und deren Zener-Spannung gleich der Haltespannung ($U_M$) des Relais 1 ist und daß dieser Schalter (7) zwischen den Erregungsspannungsimpulsen geschlossen wird.

5. Ansteuerschaltung nach Anspruch 4, wobei über das Netzteil (8) außerdem ein Akkumulator (11) zur Spannungspufferung bei Netzausfällen geladen wird,
    dadurch gekennzeichnet,
    daß der Akkumulator (11) über einen Schalter (12) an das Netzteil (8) angeschlossen wird und daß der Schalter (12) während der Dauer der Erregungsspannungsimpulse geöffnet wird.

**Claims**

1. Control circuit for a monostable relay (1), which is connected via a control switch (3) to a control voltage ($U_A$) and which is connected when the control switch (3) is closed, if the control voltage ($U_A$) is greater than an excitation voltage ($U_E$) and remains connected as long as the control voltage ($U_A$) is greater than a withstand voltage ($U_H$), wherein, in order to make a connection, the control circuit (2, 3) supplies the relay (1) with the excitation voltage ($U_E$) and, after connection, supplies the relay (1) with the withstand voltage ($U_H$),
    characterised in that when the control switch (3) is closed, the relay (1) is actuated alternately by excitation voltage impulses ($U_E$) and the withstand voltage ($U_H$), wherein the period in which the excitation voltage impulses ($U_E$) are available is substantially shorter than the intermediate pauses in which the relay is actuated by the withstand voltage ($U_H$).

2. Control circuit according to claim 1, characterised in that the excitation voltage impulses are controlled by an astable multivibrator (9).

3. Control circuit according to claim 1, characterised in that the excitation voltage impulses are controlled by a micro-computer.

4. Control circuit according to one of claims 1 to 3, wherein the control circuit is produced by a power supply unit (8) in which a voltage lying substantially across the control voltage is conducted via an impedance to a first Z-diode (4), at which the excitation voltage is picked up, characterised in that a second Z-diode (5) is provided, which is connected in parallel, via a switch (7), with the first Z-diode (4) and whose Zener-voltage is the same as the withstand voltage ($U_M$) of the relay 1, and in that this switch (7) is closed between the excitation voltage

impulses.

5. Control circuit according to claim 4, wherein an accumulator (11) is also charged via the power supply unit (8) in order to supply a stand-by voltage in the case of failures of the power supply unit,

characterised in that the accumulator (11) is connected to the power supply unit (8) via a switch (12), and in that the switch (12) is opened for the duration of the excitation voltage impulses.

**Revendications**

1. Circuit de commande pour un relais monostable (1), qui est relié par l'intermédiaire d'un interrupteur de commande (3) et est branché, l'interrupteur de commande (3) étant fermé, lorsque la tension de commande ($U_A$) est supérieure à une tension d'excitation ($U_A$), et reste branché tant que la tension de commande ($U_A$) est supérieure à une tension de maintien ($U_H$), et dans lequel le circuit de commande (2, 3) alimente le relais (1) avec la tension d'excitation ($U_A$), pour le branchement, et avec la tension de maintien ($U_H$), après le branchement, caractérisé par le fait que lorsque l'interrupteur de commande (3) est fermé, le relais (1) est chargé en alternance par des impulsions de la tension d'excitation ($U_E$) et par la tension de maintien ($U_H$), la durée, pendant laquelle les impulsions de la tension d'excitation ($U_E$) sont présentes, étant nettement plus courte que les pauses intercalaires, pendant lesquelles le relais est chargé par la tension de maintien ($U_H$).

2. Circuit de commande suivant la revendication 1, caractérisé par le fait que les impulsions de la tension d'excitation sont commandées par un multivibrateur astable (9).

3. Circuit de commande suivant la revendication 1, caractérisé par le fait que lès impulsions de la tension d'excitation sont commandées par un micro-ordinateur.

4. Circuit de commande suivant l'une des revendications 1 à 3, dans lequel la tension de commande est produite par un bloc d'alimentation réseau (8) et dans lequel une tension nettement supérieure à la tension de commande est envoyée par l'intermédiaire d'une impédance à une première diode Zener (4) sur laquelle est prélevée la tension d'excitation, caractérisé par le fait qu'il est prévu une seconde diode Zener (5), qui est branchée en parallèle avec la première diode Zener (4) par l'intermédiaire d'un interrupteur (7) et dont la tension de Zener est égale à la tension de maintien ($U_M$) du relais (1) et que cet interrupteur (7) est fermé entre les impulsions de la tension d'excitation.

5. Circuit de commande suivant la revendication 4, dans lequel en outre un accumulateur (11) servant à réaliser un tamponnage de tension dans le cas de défaillances du réseau est chargé par l'intermédiaire du bloc d'alimentation réseau (8), caractérisé par le fait que l'accumulateur (11) est raccordé par l'intermédiaire d'un interrupteur (12) au bloc d'alimentation au réseau (8) et que l'interrupteur (12) est ouvert pendant la durée des impulsions de la tension d'excitation.